# EUROPÄISCHE PATENTSCHRIFT

(11) **EP 4 127 667 B1**
(45) Veröffentlichungstag und Bekanntmachung des Hinweises auf die Patenterteilung: **03.09.2025**
(21) Anmeldenummer: 21712502.0
(22) Anmeldetag: 18.03.2021
(51) Int. Cl.: G01N 21/41, G01M 11/00, G01M 11/02

(54) **VERFAHREN ZUR ERMITTLUNG DES BRECHZAHLPROFILS EINES ZYLINDERFÖRMIGEN OPTISCHEN GEGENSTANDES**
METHOD FOR DETERMINING THE REFRACTIVE INDEX PROFILE OF A CYLINDRICAL OPTICAL ELEMENT
PROCÉDÉ DE DÉTERMINATION DU PROFIL D'INDICE DE RÉFRACTION D'UN OBJET OPTIQUE CYLINDRIQUE

(30) Priorität: 30.03.2020 EP 20166718
(43) Veröffentlichungstag der Anmeldung: 08.02.2023
(73) Patentinhaber: Heraeus Quarzglas GmbH & Co. KG, 63450 Hanau (DE)
(72) Erfinder: SCHMITT, Maximilian, Buford, Georgia 30518 (US)
(74) Vertreter: Heraeus IP
(86) Internationale Anmeldenummer: PCT/EP2021/056922
(87) Internationale Veröffentlichungsnummer: WO 2021/197857

(56) Entgegenhaltungen:
- JP-A- 2013 096 899
- JP-A- H02 309 228
- US-A- 5 365 329
- US-A1- 2013 148 113
- US-A1- 2016 123 873

## Beschreibung

### Technischer Hintergrund

Die Erfindung betrifft ein Verfahren zur Ermittlung eines Brechungsindexprofils eines optischen Gegenstandes, der eine zylinderförmige Oberfläche und eine Zylinder-Längsachse aufweist, mit folgenden Verfahrensschritten:
(a) Abscannen der zylinderförmigen Oberfläche des Gegenstandes an mehreren Abtastorten mittels senkrecht zur Zylinder-Längsachse auftreffender optischer Strahlen,
(b) Erfassen einer ortsabhängigen Intensitätsverteilung der im optischen Gegenstand abgelenkten optischen Strahlen mittels eines optischen Detektors,
(c) Bestimmen der Ablenkwinkel der Strahlen nullter Ordnung (I₀) für jeden Abtastort aus der Intensitätsverteilung (40a, 40b, 40c), umfassend ein Eliminieren von Strahlen-Intensitäten von Strahlen höherer Ordnung (I₁, I₂, I₃) aus der Intensitätsverteilung (40a, 40b, 40c), so dass eine Ablenkwinkelverteilung für die Strahlen nullter Ordnung (I₀) erhalten wird, und
(d) Berechnen des Brechungsindexprofils des Gegenstandes (22) basierend auf der Ablenkwinkelverteilung,
wobei die Verfahrensschritte (a) und (b) jeweils mit Lichtstrahlen unterschiedlicher Wellenlänge durchgeführt werden, wobei eine erste ortsabhängige Intensitätsverteilung eines ersten Lichtstrahls mit einer ersten Wellenlänge und mindestens eine weitere, zweite ortsabhängige Intensitätsverteilung eines zweiten Lichtstrahls mit einer zweiten Wellenlänge erhalten werden, und wobei das Eliminieren von Strahlen-Intensitäten von Strahlen höherer Ordnung einen Vergleich von Intensitäten der ersten Intensitätsverteilung und der zweiten Intensitätsverteilung bei gleichen Abtastorten umfasst.

Derartige zylinderförmige optische Gegenstände sind beispielsweise Faser-Vorformen, optische Fasern, Lichtleiter oder Zylinderlinsen. Eine der wichtigen Eigenschaften derartiger Gegenstände ist ihre Brechzahl (der Brechungsindex) und dessen räumliche Verteilung, insbesondere die radiale Brechzahlverteilung, die im Folgenden auch als "Brechzahlprofil" bezeichnet wird. So bestimmt beispielsweise das Brechzahlprofil der Faser-Vorform die Wellenleitereigenschaften der daraus gezogenen optischen Faser.

Zur geräteunterstützen Analyse des Brechzahlprofils werden sogenannte Preform-Analyzer eingesetzt. Dabei wird ein fokussierter optischer Strahl (im Folgenden auch als "Lichtstrahl" bezeichnet) quer zur Zylinderlängsachse des zu messenden optischen Gegenstandes, wie etwa einer Vorform für optische Fasern, rasterweise durch einen Querschnitt des Gegenstandes geführt und der Ablenkwinkel des aus dem Gegenstand austretenden, gebrochenen Lichtstrahls bezogen auf die Strahlrichtung am Auftreffort gemessen. Das rasterweise Durchleuchten des Querschnitts an den mehreren Abtastorten wird hier als "Abscannen" bezeichnet. Die Schar, der beim Abscannen des Lichtstrahls senkrecht zur Zylinderlängsachse gemessenen unterschiedlichen Ablenkwinkel wird als "Ablenkwinkelverteilung" bezeichnet. Aus den transversalen Messdaten der Ablenkwinkelverteilung kann das Brechzahlprofil im durchleuchteten Volumenbereich rekonstruiert werden.

### Stand der Technik

Ein derartiges Verfahren zur Rekonstruktion des radialen Brechzahlprofils einer zylinderförmigen optischen Vorform aus einer Ablenkwinkelverteilung und der dazugehörigen Auftreffort, ist aus der EP 3 315 948 A1 bekannt. Dabei wird die gemessene Ablenkwinkelverteilung durch Analyse und Bestimmung von Extremwerten aufbereitet, wie sie beispielsweise an den Außenkanten des Kerns oder einer Mantelschicht der Vorform auftreten.

Eine exakte Bestimmung des Brechzahlprofils eines optischen Gegenstandes wird durch Brechzahlschwankungen im mikroskopischen Maßstab erschwert. Derartige Brechzahlschwankungen zeigen sich in Form von Schlieren oder Schichten, die sich bei der Herstellung von synthetischem Glas durch schichtweises Abscheiden von Rußpartikeln (Soot) aus der Gasphase bilden. Verfahren zum schichtweisen Abscheiden sind unter den Bezeichnungen OVD (Outside Vapor Deposition), MCVD (Modified Chemical Vapor Deposition), PECVD (Plasma Enhanced Chemical Vapor Deposition), POD (Plasma Outside Deposition) und VAD (Vapor Axial Deposition) bekannt.

Die Schichten wirken als lichtdurchlässiges Beugungsgitter, an dem der den Gegenstand durchdringende Lichtstrahl zusätzlich gebeugt wird. Wenn die Schichtabstände in der Größenordnung der Wellenlänge des Lichtstrahls liegen, kann der Lichtstrahlmit den Schichten wechselwirken und zu weiteren stärker oder schwächer gebeugten optischen Strahlen unterschiedlicher Beugungsordnungen aufspalten. Jeder dieser weiteren Lichtstrahlen kann wiederum im weiteren Strahlengang zusätzliche Beugung erfahren, was zu Beugungsunschärfen durch unterschiedliche Ablenkwinkel und Austrittsorte aus dem optischen Gegenstand führt.

Infolge dieser Strahlendiffraktion wird für jeden Ausgangs-Lichtstrahl ein komplexes Ablenkungsmuster erhalten, das den lediglich gebrochenen aber nicht zusätzlich gebeugten primären Strahl (Strahl nullter Ordnung) und durch Diffraktion zusätzlich gebeugte Strahlen höherer Ordnung umfasst. Dabei kann der Ablenkwinkel der gebeugten Strahlen gegenüber dem des ungebeugten Strahls klein sein, so dass die jeweiligen Austrittsorte nahe nebeneinander liegen oder sich überlappen. Wenn die strahlendiffraktiven Effekte die Ablenkwinkelverteilung dominieren, kann die Intensität der höheren Beugungsmoden die Intensität der primären Beugungsmode sogar überschreiten. Gegebenenfalls ist es schwierig, wenn nicht gar unmöglich, das Brechzahlprofil aus der Ablenkwinkelverteilung zu rekonstruieren, wobei der Grad, in dem die Schichten die Analyse des Gegenstandes beeinträchtigen, von Abstand und Amplitude der Schichten abhängt.

Die strahlendiffraktiven Effekte können verringert werden, wenn die Messwellenlänge erhöht wird. Daher schlägt die US 5,396,323 A eine Brechzahlprofil-Analysetechnik vor, bei der zur Messung der Ablenkwinkelverteilung ein Lichtstrahl mit einer langen Messwellenlänge von beispielsweise 3395 nm verwendet wird, also im infraroten Spektralbereich.

Aus der US 2016/123873 A1 ist ein Verfahren zur Messung eines Brechzahlprofils eines zylinderförmigen Glaskörpers gemäß der eingangs genannten Gattung bekannt. Ziel ist die Vermessung von Glaskörpern mit starken Schlieren. Hierzu wird die zylinderförmige Oberfläche des Glaskörpers unter Verwendung eines kollimierten optischen Strahls, der von einem beleuchteten Spalt ausgeht, an mehreren Abtastorten abgescannt und der beleuchtete Spalt jeweils auf einer Abbildungsebene hinter dem Glaskörper fokussiert. Mittels mindestens eines Detektors wird das Abbild des beleuchteten Spalts erfasst und es werden diejenigen Austrittsorte identifiziert, an denen die optischen Strahlen nullter Ordnung auftreffen, nachdem sie ausgehend von Abtastorten den verdichteten Glaskörper passiert haben.

In der Abbildungsebene haben alle optischen Strahlen, die aus dem Glaskörper austreten ihre kleinste Größe. Durch die Erfassung der Abbildung des beleuchteten Spaltes in der Abbildungsebene, können die Strahlen nullter Ordnung leichter von den gebeugten Strahlen höherer Ordnung unterschieden werden.

Aus den Datenpaaren der Abtast- und Austrittsorte werden die Ablenkwinkel der Strahlen nullter Ordnung und eine bereinigte Ablenkwinkelverteilung der optischen Strahlen nullter Ordnung bestimmt. Mittels der Abel-Transformation wird aus der bereinigten Ablenkwinkelverteilung das Brechzahlprofil des Glaskörpers rekonstruiert.

Die US 5,365, 329 A beschreibt ein Verfahren zur Bestimmung eines Brechungsindexprofils eines zylindrischen Objekts durch Abscannen des Objekts mit einem senkrecht zur Längsachse des Objekts auftreffenden Lichtstrahl. Beim Durchgang durch das Objekt wird der Lichtstrahl in einen abgelenkten Strahl nullter Ordnung und gebeugte Lichtstrahlen höherer Ordnung aufgespaltet. Das durch das Objekt hindurchgetretene Licht wird mittels eines Detektors erfasst. Vor dem Detektor ist eine Spaltblende angeordnet, die derart ausgestaltet ist, dass nur der Strahl nullter Ordnung vom Detektor erfasst wird und die Strahlen höherer Ordnung eliminiert werden. Der Ablenkwinkel wird aus der Position des durch das Objekt hindurchgetretenen Strahls nullter Ordnung in der Fokusebene der Linse bestimmt.

Aus der JP H02 309228 A ist eine Methode zum Messen des Brechzahlprofils einer zylinderförmigen Vorform unter Einsatz von zwei Lichtquellen bekannt, die entlang der Längsachse der Vorform verteilt sind und die Licht unterschiedlicher Wellenlängen emittieren. Die von den Lichtquellen emittierten Lichtstrahlen treffen an unterschiedlichen Positionen in einer Richtung senkrecht zur Längsachse auf die Vorform auf, werden gebrochen und von einem bildgebenden Detektor erfasst. Die Ablenkwinkel werden aus den Koordinaten der Lichtstrahlen auf dem Detektor ermittelt. Aus den Ablenkwinkeln werden die Brechungsindexprofile für die unterschiedlichen Wellenlängen berechnet.

Die JP 2013-096899 A offenbart ein Verfahren zur Ermittlung eines Brechungsindexprofils einer optischen Vorform unter Einsatz von zwei Laserlichtstrahlen mit unterschiedlichen Wellenlängen. Für den primären Strahl (nullter Ordnung) haben die Lichtstrahlen unterschiedlicher Wellenlängen den gleichen Ablenkungswinkel, für die Strahlen höherer Ordnung aber nicht. Der Vergleich der beiden Ablenkwinkelverteilungen der beiden Laserlichtstrahlen mit unterschiedlichen Wellenlängen ermöglicht somit die Identifizierung des Ablenkwinkels für den Strahl nullter Ordnung, da deren Peak-Positionen miteinander übereinstimmen.

Beim bekannten Messverfahren werden die mittels der Kamera erfassten Intensitäten von Strahlen höherer Ordnung eliminiert. Das Eliminieren umfasst eine Prädiktion einer Strahlenbahn des Strahls nullter Ordnung durch den zu vermessenden Glaskörper für jeden Abtastort. Diese Prädiktion basiert auf dem Abtastort des auftreffenden optischen Strahls auf der zylinderförmigen Oberfläche und dem Ort, an dem erwartet wird, dass der Strahl nullter Ordnung auf dem optischen Detektor auftrifft. Darauf beruhend werden die Analysedaten für gebeugte Strahlen höherer Ordnung, die vom Detektor detektiert worden sind, verworfen.

Zur Identifizierung der Austrittsorte der optischen Strahlen nullter Ordnung werden zwei Kameras eingesetzt, die mittels eines Strahlteilers das Abbild des Spalts gleichzeitig erfassen können. Die Positionen der Objektebenen der Kameras werden individuell so eingestellt, dass die eine Objektebene vor der Abbildungsebene und die andere Objektebene hinter der Abbildungsebene des beleuchteten Spalts liegt. Da aber keine der Objektebenen der Kameras sich exakt in der Abbildungsebene befindet, erfassen die Kameras ein mindestens geringfügig verzerrtes Abbild des Spalts.

Um die ungefähre Auftreffposition des Strahls nullter Ordnung vorab zu bestimmen, wird ein Vor-Scan durchgeführt. Dabei wird eine Referenzvorform mit ähnlicher Größe und ähnlichem Brechungsindexprofil vermessen. Die Position der Mittelachse des Strahls nullter Ordnung, die beim Vorab-Scan gefunden wurde, wird zum Einstellen der Mittelposition des Kamera-Aufnahmefensters verwendet und es wird sichergestellt, dass die Mitte des Strahls nullter Ordnung ungefähr in dem Aufnahmefenster zentriert ist, in dem die Daten analysiert werden. Eine Alternative zum Vor-Scannen besteht darin, bereits vorhandenes Wissen über den Glaskörper und die allgemeine Form der Ablenkwinkelfunktion zu verwenden, um den erwarteten Ort des Strahls nullter Ordnung zu bestimmen.

Als Strahlenquelle wird beispielsweise eine Laserdiode eingesetzt. Die Messwellenlänge der Strahlung liegt im sichtbaren Wellenlängenbereich oder im Nahen Infrarot (NIR) oder im Mittleren Infrarot (MIR). Im Vergleich zu NIR-Strahlung wird bei Einsatz von MIR-Strahlung von beispielsweise 3,39 µm der Beugungswinkel der Strahlen höherer Ordnung vergrößert, so dass die Intensitätssignale des Strahls nullter Ordnung einen größeren Abstand von denen des gebeugten Strahls höherer Ordnung erhalten und die benachbarten Signale daher von der Kamera leichter aufgelöst werden können. Andererseits ist das Signal-Rausch-Verhältnis thermischer Detektoren für die Erfassung von MIR-Strahlung grundsätzlich schlechter als das von NIR-Detektoren und Detektoren für sichtbares Licht. Letztlich wird der Einsatz von MIR-Strahlung empfohlen, wenn die periodischen Schichten im zu vermessenden Glaskörper einen vergleichsweise großen Abstand von beispielsweise 14,1 µm haben, und der Einsatz von NIR-Strahlung wird empfohlen, wenn die periodischen Schichten im zu vermessenden Glaskörper einen vergleichsweise kleinen Abstand von beispielsweise 6,7 µm haben.

Für die Prädiktion einer Strahlenbahn und für die geeignete Auswahl der Messwellenlänge erfordert das bekannte Messeverfahren Hintergrundwissen über den zu vermessenden Glaskörper beziehungsweise über dessen Herstellung.

Die Identifizierung der Austrittsorte der optischen Strahlen nullter Ordnung anhand zweier Kameras ist konstruktiv aufwändig und erfordert einen hohen Aufwand für Justierung und Verarbeitung der erfassten Daten.

Der Erfindung liegt daher die Aufgabe zugrunde, eine Methode zur Ermittlung des Brechzahlprofils eines zylinderförmigen transparenten und mit periodischen Schichten behafteten Gegenstandes anzugeben, das ohne oder mit wenig Vorab-Informationen über den Gegenstand und dessen Herstellung auskommt.

Außerdem liegt der Erfindung die Aufgabe zugrunde, die Bestimmung der Ablenkwinkelverteilung konstruktiv möglichst einfach zu gestalten, einschließlich des Identifizierens des Strahls nullter Ordnung und des Eliminierens der Signale von Strahlen höherer Ordnung.

### Zusammenfassung der Erfindung

Diese Aufgabe wird ausgehend von einem Verfahren der eingangs genannten Gattung erfindungsgemäß dadurch gelöst, dass zum Eliminieren von Strahlen-Intensitäten von Strahlen höherer Ordnung (I1, I2, I3) ortsgleiche Intensitäten der ersten und zweiten Intensitätsverteilung mathematisch miteinander verarbeitet werden, und dass die mathematische Verarbeitung eine Verarbeitung der Schnittmengen von ortsgleichen Intensitäten, insbesondere mindestens eine Multiplikation und/oder mindestens eine Addition der ortsgleichen Intensitäten der ersten und zweiten Intensitätsverteilung umfasst.

Das Eliminieren von Strahlen-Intensitäten von Strahlen höherer Ordnung ist vor allem an denjenigen Positionen des Intensitätsverteilung wichtig, an denen der Intensitätsverlauf uneindeutig ist. Dies ist bei optischen Vorformen beispielsweise regelmäßig im Bereich von Übergängen oder Sprüngen des Brechungsindex oder bei herstellungsbedingter Schichtenbildung der Fall. Hier kann die Ablenkwinkelverteilung ein ausgeprägtes Muster, und die dazugehörige Licht-Intensität eine aufgefächerte Verteilung zeigen.

Um diese Auffächerung zu reduzieren und im Idealfall zu eliminieren wird beim erfindungsgemäßen Verfahren der zu messende optische Gegenstand gleichzeitig oder vorzugsweise nacheinander mit mindestens zwei Lichtstrahlen unterschiedlicher Wellenlänge abgescannt. Dabei wird eine erste ortsabhängige Intensitätsverteilung des ersten abgelenkten Lichtstrahls mit einer ersten Wellenlänge λ₁ und mindestens eine weitere, zweite Intensitätsverteilung des zweiten abgelenkten Lichtstrahls mit einer zweiten Wellenlänge λ₂ erhalten. Die beiden Intensitätsverteilungen unterscheiden sich insbesondere voneinander in der Position der Intensitätsmaxima für die Strahlen höherer Ordnung, während das Intensitätsmaximum für den Strahl nullter Ordnung in den Intensitätsverteilungen im Wesentlichen gleich ist. Grund dafür ist die Wellenlängenabhängigkeit des oben beschriebenen strahlendiffraktiven Effekts. Die Beugung an den mikroskopischen Brechzahlschwankungen ist bei der ersten Messwellenlänge anders als bei der zweiten Messwellenlänge, wohingegen die Brechung des Lichtstrahls im Gegenstand nahezu unabhängig von der Wellenlänge ist. Durch Vergleich der bei gleicher radialer Position (in Bezug auf die Vorform) gemessenen Strahlen-Intensitäten des ersten und des zweiten Lichtstrahls können Intensitäten von Strahlen höherer Ordnung als solche anhand ihrer relativen Verschiebung zueinander identifiziert und eliminiert werden. Und umgekehrt, können durch Vergleich der bei gleicher radialer Position (in Bezug auf die Vorform) gemessenen Strahlen-Intensitäten des ersten und des *zweiten* Lichtstrahls die Intensitäten des Strahls nullter Ordnung dadurch identifiziert werden, dass sie keine relative Verschiebung zueinander aufweisen.

Vorab-Informationen über die innere Struktur des zu vermessenden optischen Gegenstands, und insbesondere Kenntnisse über die Periodizität der Schichten oder eine Prädiktion einer Strahlenbahn und komplizierte Methoden des Ray-Tracings sind zum Identifizieren und Eliminieren der Strahlen-Intensitäten von Strahlen höherer Ordnung nicht erforderlich.

Zum Eliminieren von Strahlen-Intensitäten von Strahlen höherer Ordnung werden ortsgleiche Intensitätswerte der ersten und zweiten Intensitätsverteilung mathematisch miteinander verarbeitet.

Die mathematische Verarbeitung ortsgleicher Intensitätswerte (das sind die am selben Abtastort gemessenen Intensitätswerte) ist beispielsweise Teil einer optischen Bildverarbeitung. Sie umfasst eine oder mehrere mathematische Operationen mit dem Ziel, Strahlen-Intensitäten von Strahlen höherer Ordnung zu maskieren. Die mathematische Operation umfasst die Verarbeitung der Schnittmengen von ortsgleichen Intensitäten, insbesondere mindestens eine Multiplikation und/oder mindestens eine Addition der ortsgleichen Intensitäten der ersten und zweiten (und gegebenenfalls weiteren) Intensitätsverteilung. Durch Multiplikation ergibt sich das Produkt der ortsgleichen Intensitätswerte also quasi das Produkt der Schnittmenge, das sehr klein sein kann, wenn mindestens einer der Faktoren sehr klein ist. Durch Addition ergibt sich die Summe der ortsgleichen Intensitätswerte, also quasi die Vereinigungsmenge, die ebenfalls verhältnismäßig klein sein kann, wenn beide Summanden klein sind oder mindestens einer der Summanden klein ist.

Ergebnis der mathematischen Verarbeitung ist eine aufbereitete Intensitätsverteilung mit vergleichsweise kleinen Intensitätswerten im Bereich mit nennenswerter relativer Verschiebung in den ortsgleichen Strahlen-Intensitäten, und mit hohen Intensitätswerten im Bereich ohne oder mit allenfalls geringer Verschiebung, also im Bereich der ortsstabilen Ablenkwinkel des Strahls nullter Ordnung.

Um die Detektionsgenauigkeit des Strahls nullter Ordnung weiter zu verbessern, kann das Eliminieren von Strahlen-Intensitäten von Strahlen höherer Ordnung eine Maßnahme umfassen, bei der Intensitäten der ersten, der mindestens einen weiteren, zweiten und/oder einer aufbereiteten Intensitätsverteilung, die einen Intensität-Schwellwert unterschreiten, ganz oder teilweise eliminiert werden.

Eine aufbereitete Intensitätsverteilung wird beispielsweise erhalten, indem die ortgleichen Intensitäten der ersten und der zweiten Intensitätsverteilung einer mathematischen Operation unterzogen werden, wie oben erläutert. Durch den Intensitäts-Schwellwertfilter werden Intensitätssignale mit niedrigem Pegel rechnerisch unterdrückt oder entfernt. Vorzugsweise werden alle Intensitätswerte unterhalb des Schwellenwerts verworfen, bevor der Ablenkwinkel des Strahls nullter Ordnung bestimmt wird.

Der Intensität-Schwellwert wird dabei vorzugsweise auf einen Wert gesetzt, der weniger als 20%, vorzugsweise weniger als 15%, eines maximalen Intensitätswertes des Licht-Intensitätsprofils beträgt.

Bei hohen festen Schwellwerten, beispielsweise, oberhalb von 20% des Maximalwertes, geht möglicherweise wichtige Informationen verloren. Daher sind konstante Schwellwerte grundsätzlich nur so hoch wie benötigt zu wählen.

Der Vergleich von Intensitäten der ersten und der zweiten Intensitätsverteilung bei gleichen Abtastorten zum Eliminieren von Strahlen-Intensitäten von Strahlen höherer Ordnung umfasst vorzugsweise eine rechnergestützte Bildverarbeitung.

Bei einer besonders bevorzugten Verfahrensvariante wird zum Erfassen der Strahlen-Intensitätsverteilung gemäß Verfahrensschritt (b) als optischer Detektor eine Zeilenkamera mit nur einem lichtempfindlichen Zeilensensor eingesetzt.

Im Vergleich zu einem Flächensensor ist die von einem Zeilensensor bei gleicher Auflösung erzeugte Datenmenge wesentlich geringer und kann schneller ausgelesen und verarbeitet werden.

Der Zeilensensor hat vorteilhafterweise eine Länge, die zur Erfassung der gesamten Ablenkwinkelverteilung des Gegenstandes in einem einzigen Scanvorgang ausreicht. Zeilensensoren mit einer Länge von mindestens 40 mm, vorzugsweise mindestens 60 mm haben sich dafür bewährt.

Je länger die Sensorzeile ist, umso größere Ablenkwinkel lassen sich abbilden, das heißt: umso größere Brechzahlsprünge im Brechungsindexprofil können erfasst werden. Zeilensensoren mit einer Länge von mehr als etwa 80 mm sind in der Regel nicht erforderlich, da mittels einer Optik vor der Zeilenkamera auch eine verkleinerte Abbildung auf den Zeilensensor realisierbar ist, allerdings unter Inkaufnahme von Auflösungseinbußen.

Die zu verarbeitende Datenmenge wird besonders geringgehalten, wenn auf eine farbliche Auflösung verzichtet und - wie bei der hier bevorzugten Verfahrensweise - ein monochromatischer Zeilensensor eingesetzt wird.

Die zu verarbeitende Datenmenge wird weiter reduziert, wenn der Zeilensensor mit einer niedrigen Farbtiefe betrieben wird, wie beispielsweise mit einer Bit-Tiefe von 8. Die 8-Bit-Tiefe ermöglicht bei geringem Datenaufkommen eine für die vorliegende Anwendung ausreichende Auflösung von 256 Helligkeitswerten.

Zum Abscannen der Oberfläche des optischen Gegenstandes wird in der Regel ein fokussierter optischer Strahl eingesetzt. Die Fokussierung erfolgt typischerweise mittels konvexer Linsen. Dabei hängt die Fokuslage jedoch von der Wellenlänge der Messstrahlung ab. Da beim Verfahren unterschiedliche Messwellenlängen eingesetzt werden, müssen bei einer Fokussierung mittels konvexer Linse Kompensierungsmaßnahmen getroffen werden, um eine konstante Fokuslage zu erreichen. Alternativ und bevorzugt wird zum Abscannen der zylinderförmigen Oberfläche gemäß Verfahrensschritt (a) der optische Strahl mittels eines Parabolspiegels fokussiert.

Ein Parabolspiegel, besonders bevorzugt ein sogenannter Off-Axis-Parabolspiegel, ermöglicht eine dispersionsunabhängige Fokussierung der optischen Strahlen unterschiedlicher Wellenlänge.

Bei einer bevorzugten Verfahrensweise werden die Verfahrensschritte (a) und (b) mit Strahlung einer ersten Wellenlänge und mindestens einer zweiten Wellenlänge durchgeführt, wobei sich die erste Wellenlänge und die zweite Wellenlänge um mindestens 50 nm und um maximal 400 nm, und vorzugsweise um mindestens 80 nm und um maximal 300 nm voneinander unterscheiden.

Bei einer anderen bevorzugten Verfahrensvariante werden die Verfahrensschritte (a) und (b) mit Strahlung der ersten Wellenlänge, der zweiten Wellenlänge und einer dritten Wellenlänge durchgeführt, wobei die dritte Wellenlänge länger als die erste und kürzer als die zweite Wellenlänge ist, und sich die dritte Wellenlänge von der ersten und von der zweiten Wellenlänge um mindestens 50 nm und um maximal 400 nm, und vorzugsweise um mindestens 80 nm und um maximal 300 nm unterscheidet.

Bei Einsatz von drei unterschiedlichen Wellenlängen ergibt sich der praktische Vorteil, dass Farbbilder herkömmlich mit drei Farbkanälen gespeichert und vor allem auch verarbeitet werden. Daher können zur Auswertung der Intensitätssignale traditionelle Methoden der Bildverarbeitung angewandt werden.

Je größer der Wellenlängenunterschied benachbarten Wellenlängen ist, umso ausgeprägter ist die relative Verschiebung der Ablenkwinkel, beziehungsweise der Strahlen-Intensitäten, der Strahlen gleicher höherer Ordnung. Andererseits ist es vorteilhaft, wenn ein und derselbe Detektor für beide beziehungsweise für alle Messwellenlängen einsetzbar ist, was am einfachsten durch vergleichsweise geringe Wellenlängenunterschiede technisch realisierbar ist.

Die Verfahrensschritte (a) und (b) werden vorzugsweise seriell mit Strahlung der ersten Wellenlänge und anschließend mit Strahlung der zweiten und weiteren Wellenlänge durchgeführt.

Dabei besagen die Begriffe "erste" und "zweite" Wellenlänge nichts darüber, welcher der Wellenlängen die kürzere oder die längere ist. Die serielle Verarbeitung erleichtert die Auswertung der Intensitätsdaten durch serielle mathematische Verrechnung.

Es hat sich eine Verfahrensweise bewährt, bei der die unterschiedlichen Wellenlängen im Wellenlängenbereich von 400 bis 1.600 nm, und vorzugsweise unterhalb von 1.100 nm liegen.

Für Messwellenlängen im Sichtbaren Wellenlängenbereich und im Nahen Infrarotbereich bis maximal 1.600 nm, bevorzugt maximal 1.100 nm ergibt sich ein ausreichend gutes Signal-Rausch-Verhältnis und es stehen Lichtquellen und Detektoren zur Verfügung. Der Nahe Infrarote Wellenlängenbereich beginnt definitionsgemäß bei etwa 780 nm.

Einerseits ist ein Mindestabstand zwischen benachbarten Messwellenlängen erforderlich, damit die relative Verschiebung der Ablenkwinkel beziehungsweise der dazugehörigen Strahlen-Intensitäten der gleichen höheren Ordnung, beispielsweise der jeweils ersten Ordnung, und damit die Aufspaltung der entsprechenden Strahlen-Intensitäten sichtbar wird. Allerdings kann die Zuordnung eines Ablenkwinkels beziehungsweise der dazugehörigen Strahlen-Intensitäten zu einer bestimmten Messwellenlänge erschwert werden, wenn der Ablenkwinkel einer höheren Ordnung der einen Messwellenlänge mit dem Ablenkwinkel einer anderen höheren Ordnung der anderen Messwellenlänge näherungsweise zusammenfällt. Ein solches "näherungsweises Zusammenfallen" kann sich beispielsweise ergeben, wenn die betreffenden Messwellenlängen ein etwa gleiches kleinstes gemeinsames Vielfaches haben. Als "ungefähr gleich" wird hiermit eine Wellenlängendifferenz von weniger als 40 nm definiert. Die Gefahr eines solchen "näherungsweisen Zusammenfallens" von gebeugten Strahlen unterschiedlichen höheren Ordnungen (bis maximal zu dritten Ordnung) wird verringert, wenn mindestens eine der Messwellenlängen aus einem Wellenlängenbereich gewählt wird, der nahe an der oberen Grenze der spektralen Empfindlichkeit des Detektors liegt. Diese Voraussetzungen sind regelmäßig erfüllt für Messwellenlängen im Sichtbaren Wellenlängenbereich und im Nahen Infrarotbereich bis maximal 1.600 nm, bevorzugt maximal 1.100 nm, und bei einer spektralen Empfindlichkeit des Detektors in diesem Wellenlängenbereich. Bei einem bevorzugten Ausführungsbeispiel sind die unterschiedlichen Wellenlängen ausgewählt aus den Wellenlängenbereichen: 635±50 nm, 840±50 nm, 970 ±50 nm, 1040 ±50 nm und 1550±50 nm.

Es hat sich auch als vorteilhat erwiesen, wenn die Strahlen beim Abscannen der zylinderförmigen Oberfläche des Gegenstandes auf einen Punkt im optischen Gegenstand fokussiert werden. Bei Fokussierung auf einen Punkt im Volumen des zylinderförmigen Gegenstandes, beispielsweise auf die Zylinder-Längsachse können scharfe Übergänge in Form von Brechzahlsprüngen besser abgebildet und ausgewertet werden als bei einer Fokussierung außerhalb des Volumens.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Optische Strahlen

Die beim Abscannen auf der Zylinder-Oberfläche des zu vermessenden Gegenstandes auftreffenden optischen Strahlen ergeben sich beispielsweise durch die Verlagerung eines Lichtstrahls, wie etwa eines Laserstrahls.

### Ablenkwinkelverteilung Ψ(y)

Der Ablenkwinkel ist definiert als Winkel zwischen dem aus dem zu messenden Gegenstand austretenden Austrittsstrahl und dem in den zu vermessenden optischen Gegenstand eintretenden Eintrittsstrahl. Die Schar der beim Abscannen des Gegenstandes infolge der Verlagerung des Lichtstrahls senkrecht zur Zylinder-Längsachse (in y-Richtung) gemessenen Ablenkwinkel ergibt die "Ablenkwinkelverteilung Ψ(y)".

### Strahlen-Intensitätsverteilung

Die Ablenkwinkelverteilung kann dargestellt werden als örtliche Verteilung der Strahlen-Intensität, die der optische Detektor beim Abscannen des zu vermessenden optischen Gegenstandes erfasst. Insoweit repräsentiert die beim Abscannen gemessene Strahlen-Intensitätsverteilung die Ablenkwinkelverteilung. Die Strahlen-Intensitätsverteilung kann infolge von Beugungseffekten und Entstehung von gebeugten Strahlen höherer Ordnung in einem oder in mehreren Bereichen aufgefächert sein. Diese Auffächerung ist einer bestimmten radialen Position der Vorform zuzuordnen und sie kommt zustande, wenn der Detektor an ein und derselben Messposition gleichzeitig Strahlenintensitäten an mehreren Stellen seines optischen Sensors erfasst..

### Ausführungsbeispiel

Nachfolgend wird die Erfindung anhand eines Ausführungsbeispiels und einer Zeichnung näher erläutert. In der Zeichnung zeigt im Einzelnen
- **Figur 1:**: eine schematische Darstellung einer Ausführungsform eines Messsystems zur Messung einer Ablenkwinkelverteilung,
- **Figur 2:**: eine Skizze zur Erläuterung der Durchführung der Messung,
- **Figur 3:**: an einer durch einen OVD-Prozess hergestellten Vorform mit Kern und Mantel gemessene Strahlen-Intensitätsverteilungen für drei unterschiedliche Messwellenlängen,
- **Figur 4:**: Ausschnitte der Strahlen-Intensitätsverteilungen von Figur 3 in vergrößerter Darstellung, und
- **Figur 5:**: eine Skizze mit ursprünglichen Lichtprofilen, die durch Anregung von Pixeln einer Zeilenkamera bei ein und derselben Messposition erhalten werden ((a) und (b)) sowie zur rechnerischen Verarbeitung ((c) und (d)) der ursprünglichen Lichtprofile zwecks Eliminierung des Anteils gebeugter Strahlung,
- **Figur 6:**: ein Diagramm mit einer Gegenüberstellung der ermittelten Brechzahlverteilungen bei einer Auswertung mittels einer Methode nach dem Stand der Technik und der erfindungsgemäßen Methode, bei der störende Beugungen höherer Ordnungen in den Rohdaten identifiziert und eliminiert werden.

Das Verfahren dient zur Ermittlung eines Brechzahlprofils eines zylinderförmigen optischen Gegenstandes, im Ausführungsbeispiel einer mittels OVD-Verfahren erzeugten optischen Vorform zum Ziehen von Lichtleitfasern, die über einen Teilbereich ihres Volumens eine ausgeprägte Schichtstruktur aufweist.

Ein Querschnitt der Vorform wird rasterweise mit einem Lichtstrahl durchleuchtet (abgescannt) und aus dem jeweiligen Auftreffort des Lichtstrahls auf der Zylindermantelfläche der Vorform und dem Auftreffort des Lichtstrahls auf einem optischen Sensor kann der Ablenkwinkel berechnet werden. Die Schar der Ablenkwinkel der Lichtstrahlen eines Scans bilden die Ablenkwinkelverteilung, aus der das Brechzahlprofil der Vorform rekonstruiert wird.

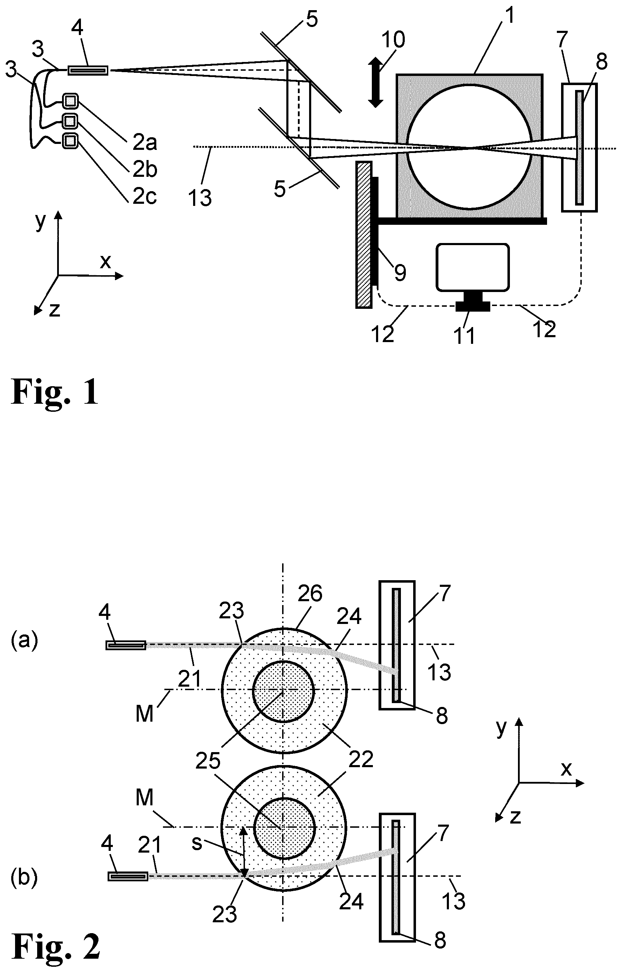

Die Messung der Ablenkwinkelverteilung erfolgt mittels eines konstruktiven veränderten handelsüblichen Preform-Analyzers P-106 der Firma York Technology Ltd.. **Figur 1** zeigt schematisch den optischen Aufbau. Der Analyzer verfügt über eine zylinderförmige Messzelle 1 zur Aufnahme des Querschnitts der zu vermessenden Vorform und einer die Vorform umgebenden Immersionsflüssigkeit. Die werksseitig vorgesehene Lichtquelle ist ersetzt durch drei Laserdioden 2a, 2b, 2c mit jeweils spezifischen Emissionswellenlängen von 842 nm (2a), 977 nm (2b) und 1080 nm (2c). Diese Messwellenlängen sind so gewählt, dass innerhalb der Grenzen der spektralen Empfindlichkeit der Zeilenkamera 7 ein "näherungsweises Zusammenfallen" von gebeugten Strahlen unterschiedlicher höherer Ordnungen ausgeschlossen ist.

Die Laserdioden 2a, 2b, 2c mit den unterschiedlichen Emissionswellenlängen sind über zwei Y-Faserbündel 3 mit einem Strahleneingangsbauteil 4 verbunden, das eine Baueinheit mit einer Strahlkonditionierungsoptik 5 bildet. Die Strahlkonditionierungsoptik dient im Wesentlichen der dispersionsunabhängigen Fokussierung der Messstrahlen unterschiedlicher Wellenlänge auf ein und demselben Fokuspunkt. Sie besteht im Wesentlichen aus zwei sogenannten Off-Axis-Parabolspiegeln 5 und ist so konfiguriert, dass sich der Strahlfokus des Lichtstrahls in der y-z-Ebene und in der Zylinderlängsachse der Messzelle 1 befindet. Der aus der Vorform austretende Lichtstrahl trifft auf eine Zeilenkamera 7 mit einem Zeilensensor 8. Die Erstreckungsrichtung des Zeilensensors 8 ist die y-Richtung, wie vom kartesischen Koordinatenkreuz angezeigt. Das Zentrum der Zeilenkamera 7 befindet sich idealerweise auf der optischen Achse 13. Dadurch wird erreicht, dass auch die größtmöglichen Ablenkwinkel in der Ablenkwinkelverteilungen noch vollständig aufgelöst werden können.

Die Zeilenkamera 7 ist eine CMOS-Zeilenkamera mit monochromatischem Sensor, die unter der Bezeichnung UNIIQA+ 16K CL MONOCHROME von der Firma Teledyne e2V im Handel ist. Sie verfügt über eine Sensorlänge von 82 mm und eine horizontale Auflösung von 16384 Pixeln bei einer Pixelgröße von 5 µm und eine Farbtiefe (Helligkeitsauflösung) von 12 Bit, wovon aber nur 8 Bit verwendet werden. Die Zeilenkamera hat im Wellenlängenbereich von 400 nm bis etwa 1100 nm eine ausreichende spektrale Empfindlichkeit.

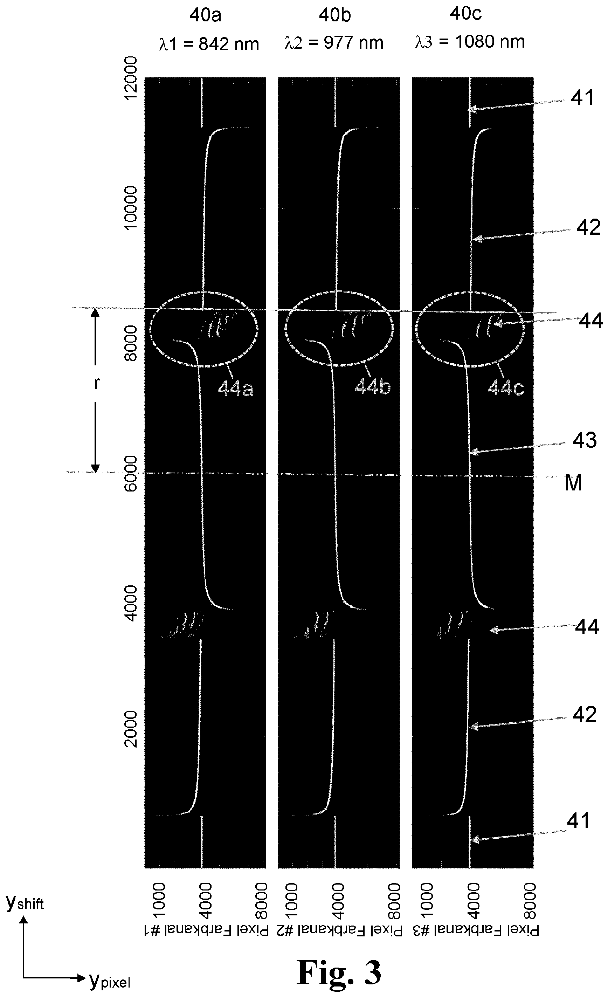

Die in y-Richtung abgelenkten Lichtstrahlen werden vom Zeilensensor 8 der Zeilenkamera 7 detektiert, wobei die dafür notwendige zu verarbeitende Datenmenge trotz der großen Ausdehnung mit der 82 mm langen Sensorlänge überschaubar klein bleibt (um einen Faktor von einigen 1000 kleiner als bei Einsatz einer Flächenkamera). Infolge dieser Sensorlänge kann selbst bei verhältnismäßig großen aufzulösenden Brechzahlsprüngen der Vorform auf etwaige Optiken hinter der Messzelle 1 verzichtet werden. Die Zeilenkamera 7 reduziert den Umfang der auszuwertenden Messdaten auf das Wesentliche, wodurch sich signifikante Verbesserungen in der Performance ergeben. Die Auswertung wird weiter unten anhand der Figuren 3 bis 6 noch näher erläutert.

Die Position der Messzelle 1 ist in Bezug auf die optische Achse 13 veränderbar. Dazu ist die Messzelle 1 auf einem Verschiebetisch 9 montiert und mittels diesem in der anhand des Richtungspfeils 10 angezeigten Richtung (y-Richtung) senkrecht zur optischen Achse 13 verschiebbar. Der Verschiebetisch 9 und die Zeilenkamera 7 sind über Datenleitungen 12 mit einem Rechner 11 verbunden.

**Figur 2** zeigt schematisch den Strahlengang des Lichtstrahls 21 mit der in die Messzelle 1 (Figur 1) eingesetzten Vorform 22 bei einer oberen Scanposition (a) und einer unteren Scanposition (b). Der in das Strahleneingangsbauteil 4 eintretende Lichtstrahl 21 trifft auf die zylinderförmige Oberfläche 26 und wird am Eintrittsort 23 in die Vorform 22 in Richtung auf die Vorform-Mittelachse 25 gebrochen. Beim Austritt am Austrittsort 24 wird der Lichtstrahl 21 erneut gebrochen und gelangt auf den Zeilensensor 8 der Zeilenkamera 7. Dabei erfassen die lichtempfindlichen Pixel des Zeilensensors 8 an ein und demselben Abtastort 23 - wie beispielsweise am Abtastort 23 im Abstand s von der Mittelinie M (Figur 2b) - eine einzige Strahlen-Intensität, wobei ein Pixel oder wenige benachbarte Pixel angeregt werden. Oder sie erfassen mehrere Strahlen-Intensitäten an unterschiedlichen Stellen des Zeilensensors 8, wobei mehrere voneinander beabstandete Pixel angeregt werden. Letzteres geschieht beispielsweise bei einem Lichtstrahl, der außer der Lichtmode nullter Ordnung noch zusätzlich eine oder mehrere höhere Ordnungen transportiert. Die angeregten Pixel markieren eine über die Länge des Zeilensensors 8 verteilte Strahlen-Intensität des abgelenkten Lichtstrahls 14, die im Folgenden auch als "Leuchtpixelprofil" bezeichnet wird. Der Zeilensensor 8 und das Leuchtpixelprofil erstrecken sich in y-Richtung (im Koordinatensystem von Figur 2). Bei den folgenden Erläuterungen zum Leuchtpixelprofil wird für dessen Erstreckungsrichtung auch die Bezeichnung yₚᵢₓₑₗ" verwendet.

Durch rasterweises Verlagern der Vorform 22 senkrecht zur optischen Achse 13 verlagert sich der Auftreffpunkt des Lichtstrahls entlang der Vorform 22 bis deren Querschnittvollständig durchleuchtet ist. Bei jeder Verlagerungsposition erfasst der Zeilensensor 8 der Zeilenkamera 7 eine neues Leuchtpixelprofil, das jeweils vom abgelenkten, nicht gebeugten Strahl nullter Ordnung und etwaigen abgelenkten und gebeugten Strahlen höherer Ordnung gebildet wird. Das Verlagern der Vorform 22 erfolgt ebenfalls in y-Richtung (im Koordinatensystem von Figur 2). Zur Abgrenzung gegenüber Erstreckungsrichtung "yₚᵢₓₑₗ" wird bei der folgenden Beschreibung die Verlagerungsrichtung auch als "y_{shift}" bezeichnet.

Ablenkwinkelverteilungen Ψ(y) werden in der Regel in einem zweidimensionalen Intensitätsverteilungs-Diagramm dargestellt, bei dem auf der einen Achse das Leuchtpixelprofil in Richtung yₚᵢₓₑₗ aufgetragen ist, und auf der anderen Achse die Verlagerungsposition entlang y_{shift}. Die zweidimensionale Strahlen-Intensitätsverteilung, welche die eindimensionale Ablenkwinkelverteilung Ψ(y) der Vorform 22 insgesamt repräsentiert, ergibt sich bei dieser Darstellung durch die Aneinanderreihung aller erfassten Leuchtpixelprofile entlang y_{shift}.

Drei dieser Diagramme zeigt beispielsweise die Figur 3. Die Strahlen-Intensitätsverteilungen 40a, 40b, 40c sind Ablenkwinkelverteilungen, die sowohl Intensitätssignale der Strahlen nullter Ordnung als auch Intensitätssignale von Strahlen höherer Ordnung beinhalten.

Diese Strahlen-Intensitätsverteilungen werden ausgewertet mit dem Ziel, den Intensitätsverlauf des Strahls nullter Ordnung zu identifizieren und zu diesem Zweck die Signale zu eliminieren, die auf Strahlen höherer Ordnung zurückzuführen sind. Zu diesem Zweck wird derselbe Vorform-Querschnitt nacheinander mit dem Lichtstrahl aller Laserdioden 2a, 2b, 2c und ihren spezifischen unterschiedlichen Emissionswellenlängen abgescannt. Ergebnis sind drei von der Zeilenkamera 8 aufgezeichnete und vom Rechner 11 abgespeicherte ursprüngliche Strahlen-Intensitätsverteilungen.

Die drei Ablenkwinkelverteilungen von **Figur 3** zeigen jeweils für eine der oben genannten Messwellenlängen (Dioden 2a, 2b, 2c) die von der Zeilenkamera 7 erfassten Strahlen-Intensitätsverteilung 40a, 40b, 40c. Die Strahlen-Intensitätsverteilungen 40a, 40b, 40c sind in der Regel in einer einzigen gemeinsamen Aufnahme enthalten; aber hier ist aus Darstellungsgründen für jeden der Farbkanäle eine separate Aufnahme gezeigt. Die zweidimensionalen Strahlen-Intensitätsverteilungen 40a, 40b, 40c umfassen jeweils 8000 Pixel in horizontaler Richtung (yₚᵢₓₑₗ) und 12000 Pixel in vertikaler Richtung (y_{shift}). Sie bilden gleichzeitig Ablenkwinkelverteilungen Ψ(y); diese sind weitgehend umgekehrt spiegelsymmetrisch um die Mittellinie M. Jede der Ablenkwinkelverteilungen Ψ(y) zeigt Randbereiche, die jeweils dem Messzellenmaterial 41 beziehungsweise dem Immersionsöl 42 zuzuordnen sind. Der zentrale Kern-Bereich 43 der Vorform 22 besteht aus undotiertem Quarzglas und ist umgeben von einem Mantel 44 aus einem mit Fluor dotierten Quarzglas. Der Radius der Vorform 22 ist mit dem Blockpfeil "r" bezeichnet. Innerhalb der Strecke "r" ist jeder Ablenkwinkel beziehungsweise jeder Strahlen-Intensitätswert einem bestimmten Auftreffpunkt des Lichtstrahls auf der Vorform-Oberfläche und einer bestimmten radialen Position der gemessenen Vorform zuzuordnen.

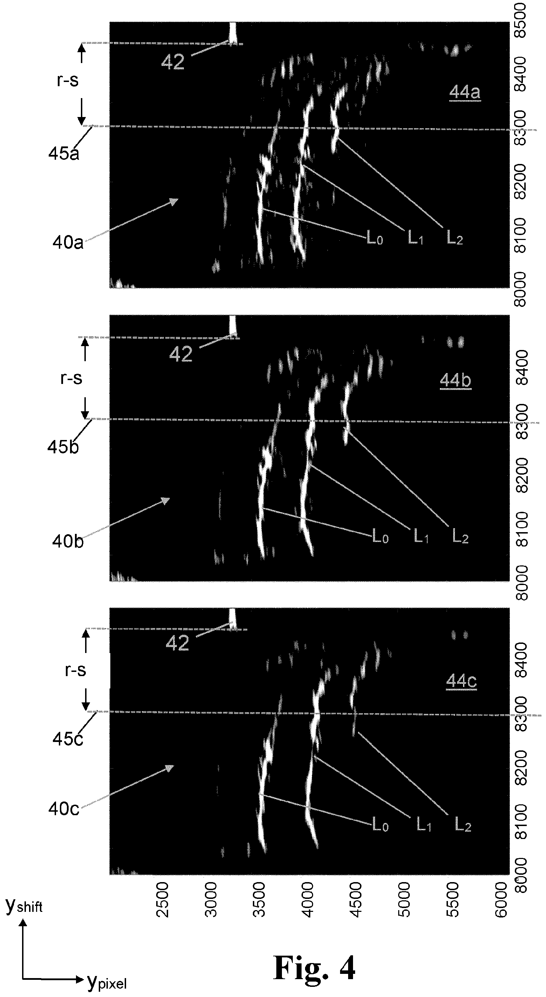

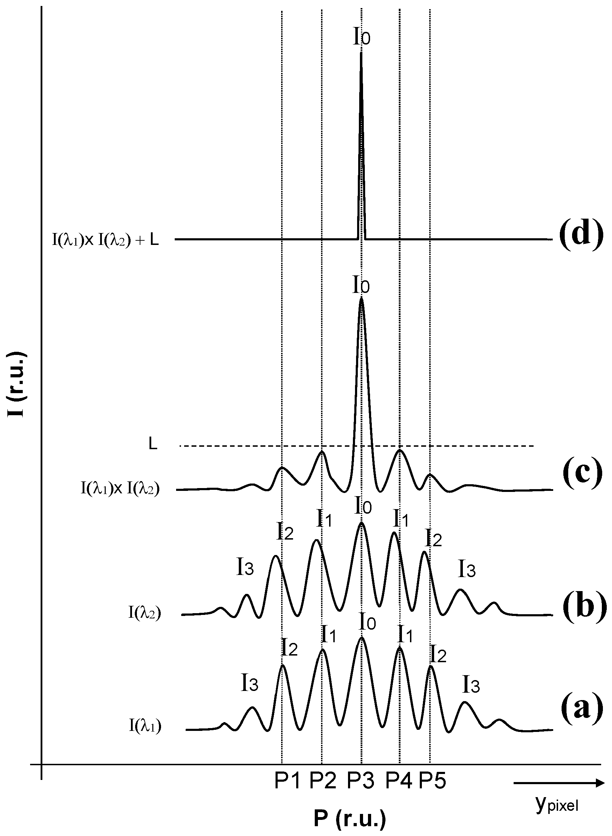

Im Bereich des Mantels 44 zeigen die Strahlen-Intensitätsverteilungen 40a, 40b, 40c durch eine Umrahmung markierte Bereiche 44a, 44b, 44c, die eine ausgeprägt strukturierte und breit aufgefächerte Licht-Intensitätsverteilung in Richtung yₚᵢₓₑₗ aufweisen und die keine klare und eindeutige Identifizierung der Ablenkwinkelverteilung in diesem Bereich erlauben. Die Auffächerung der Licht-Intensitätsverteilung im Mantelbereich entsteht aufgrund von Diffraktion des jeweiligen Lichtstrahls 21 an der Schichtstruktur der Vorform 22. Die in diesen Bereichen vom Zeilensensor 8 erfassten "'Leuchtpixelprofile" zeigen nicht nur eine einzelne Strahlen-Intensität (wie dies etwa im Kernbereich 43 der Fall ist), sondern mehrere, voneinander beabstandete Strahlen-Intensitäten. Dies wird weiter unten anhand der Figuren 4 und 5 noch näher erläutert.

Die in **Figur 4** gezeigte Vergrößerung der Bereiche 44a, 44b, 44c umfasst den yₚᵢₓₑₗ-Zahlenbereich von etwa 2500 bis 6000 und den y_{shift}-Zahlenbereich von 8000 bis 8500, der dem Mantelbereich 44 zuzuordnen ist. Die Aufnahmen zeigen jeweils mehrere Licht-Intensitätslinien L₀, L₁; L₂, die dem Strahl nullter Ordnung und gebeugten Strahlen höherer Ordnung bei der jeweiligen Messwellenlänge zuzuordnen sind. Bei genauerer Betrachtung ist erkennbar, dass der Abstand zwischen den Licht-Intensitätslinien L₀, L₁, L₂ vom Bereich 44a über 44b zum Bereich 44c zunimmt. Dies belegt die Wellenlängenabhängigkeit dieses Abstandes, beziehungsweise die Wellenlängenabhängigkeit der Positionen der Ablenkwinkelverteilungen der Strahlen höherer Ordnung. Demgegenüber ist die Position des Strahls nullter Ordnung unabhängig von der Messwellenlänge an ein und derselben Position zu finden. Im Ausführungsbeispiel ist dies die Licht-Intensitätslinie L₀, die in allen Aufnahmen im Vertikalpixel-Zahlenbereich um 3600 liegt. Auffällig hierbei ist, dass sich die Licht-Intensitätslinie L₀ nicht in der Mitte der erscheinenden Beugungsordnungen befindet. Ursache hierfür ist, dass das optische Gitter, an dem die Strahlen gebeugt werden (also die Schlieren- oder Schichtenstruktur der Vorform), nicht ideal ist, sondern gekrümmt und aperiodisch. Im Bereich 44a ist an der radialen Position r-s (Pixelzahl 8300; mit r= Vorformradius und s=Abstand zwischen Abtastort 23 und Vorform-Mittelinie M) eine horizontale Hilfslinie 45a eingezeichnet, und durch die Bereiche 44b und 44c an derselben radialen Position r-s (Pixelzahl 8300) eine weitere horizontale Hilfslinie 45b beziehungsweise 45c. Die Hilfslinien 45a, 45b, 45c verlaufen in Richtung yₚᵢₓₑₗ und queren jeweils mehrere Licht-Intensitätslinien L₀, L₁; L₂. Das entlang der Hilfslinien 45a, 45b, 45c messbare Licht-Intensitätsprofil wird hier als "Leuchtpixelprofil" bezeichnet.

Die Positionsunabhängigkeit der Ablenkwinkelverteilung Ψ(y) für den Strahl nullter Ordnung, genauer gesagt: die Positionsunabhängigkeit der Licht-Intensitätslinie L₀ ermöglicht die Identifizierung, Maskierung und Eliminierung der übrigen Licht-Intensitätslinien L₁ und L₂ (und etwaiger anderer), wie dies nachfolgend erläutert wird. Die Diagramme der **Figuren 5(a), 5(b)** zeigen schematisch jeweils ein Leuchtpixelprofil (I(λ₁); I(λ₂)) für die spezifische Mess-Wellenlängen (λ₁; λ₂). Die integrierte Licht-Intensität I (in relativer Einheit) ist dabei gegen die Ortskoordinate P aufgetragen, welche die Pixelreihung des Zeilensensors Richtung yₚᵢₓₑₗ repräsentiert. Das Leuchtpixelprofil I(λ₁) könnte beispielsweise entlang der Hilfslinie 45a (Figur 4) gemessen worden sein, und das Leuchtpixelprofil I(λ₂) beispielsweise entlang der Hilfslinie 45b. Die beiden Leuchtpixelprofile (I(λ₁); I(λ₂)) sind an derselben radialen Position s (Figur 2b) des Zeilensensors 8 entstanden und gehören insoweit zu "ortsgleichen" Strahlen-Intensitätsverteilungen. Diese unterscheiden sich voneinander im Wesentlichen in der Position der Intensitätssignale I₁, I₂; I₃ für die gebeugten Strahlen höherer Ordnung. Die Positionen P1 bis P5 von Intensitätsmaxima von gebeugten Strahlen höherer Ordnung sind relativ zueinander verschoben, während das Intensitätssignal I₀ für den lediglich gebrochenen Strahl nullter Ordnung in den Intensitätsverteilungen im Wesentlichen an der gleichen Position liegt, im Beispiel an der Position P3.

**Figur 5(c)** zeigt schematisch ein aufbereitetes Leuchtpixelprofil (I(λ₁)x I(λ₂)), das erhalten wird, indem ortsgleiche Intensitätswerte des ersten Leuchtpixelprofils I(λ₁) und des zweiten Leuchtpixelprofils I(λ₂) einer mathematischen Operation unterzogen werden. Diese umfasst eine Multiplikation der ortsgleichen Intensitätswerte des ersten und zweiten Leuchtpixelprofils (I(λ₁); I(λ₂)). Durch die Multiplikation ergibt sich das Produkt der Schnittmenge der ortsgleichen Intensitätswerte, das im Ausführungsbeispiel bei den beiden bereits ursprünglich vergleichsweise hohen Intensitätssignalen I₀ besonders hoch ist, und vergleichsweise klein ist bei den Intensitätssignalen I₁, I₂; I₃. Das nach dem ersten mathematischen Verarbeitungsschritt erhaltene aufbereitete Leuchtpixelprofil (I(λ₁)x I(λ₂)) hat vergleichsweise kleine Intensitätswerte im Bereich mit nennenswerter relativer Verschiebung in den Ablenkwinkeln, und vergleichsweise hohe Intensitätswerte im Bereich ohne oder mit allenfalls geringer Verschiebung, also im Bereich der ortsstabilen Ablenkwinkel des Strahls nullter Ordnung.

Um die Detektionsgenauigkeit des Strahls nullter Ordnung weiter zu verbessern, wird das aufbereitete Leuchtpixelprofil (I(λ₁)x I(λ₂)) in einem zweiten mathematischen Verarbeitungsschritt einem Intensitäts-Schwellwertfilter unterworfen, bei dem Intensitätssignale unterhalb eines Pegels L, der bei 10% des Maximalwerts des aufbereiteten Leuchtpixelprofils (λ₁(P), λ₂(P)) festgelegt wird, rechnerisch entfernt werden.

**Figur 5(d)** zeigt schematisch das Leuchtpixelprofil (I(λ₁)x I(λ₂) + L) nach Durchführung dieser mathematischen Operation. Es ist nur noch ein einziger Peak vorhanden, auf Basis von dessen die Position der Ablenkwinkel des Strahls nullter Ordnung bestimmt und festgelegt wird. Bei dem nach dieser Aufbereitung erhaltenen Leuchtpixelprofil (I(λ₁)x I(λ₂) + L) sind die aufgrund von Diffraktion des Lichtstrahls 21 an der Schichtstruktur der Vorform 22 breit aufgefächerte ursprünglich gemessene Leuchtpixelprofile, ersetzt durch ein klares und eindeutiges Signal, das nur den Ablenkwinkel des Strahls nullter Ordnung an der radialen Messposition s wiedergibt.

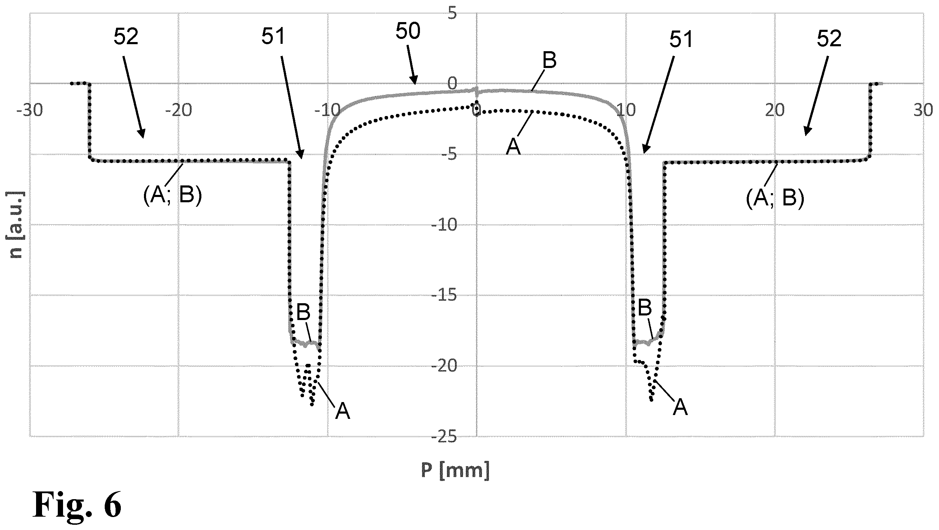

Nach entsprechender Verarbeitung der Strahlen-Intensitätsverteilungen 40a, 40b, 40c an allen radialen Positionen (s), beziehungsweise an denjenigen radialen Positionen, wo diese Aufbereitung erforderlich ist, wird eine aufbereitete Strahlen-Intensitätsverteilung beziehungsweise Ablenkwinkelverteilung Ψ mit einem eindeutigen Intensitätsverlauf für den Strahl nullter Ordnung erhalten. Daraus wird anhand der bekannten inversen Abel-Transformation das radiale Brechzahlprofils der Vorform ermittelt. Ein Beispiel dafür zeigt das Diagramm von **Figur 6****,** in dem die Brechzahl n (im Vergleich zu undotiertem Quarzglas, in relativen Einheiten) gegen die radiale Position P (in mm) aufgetragen ist. Die gemessene Vorform umfasst einen Kernbereich 50, einen inneren Mantelbereich 51 und einen äußeren Mantelbereich 52, wobei sich die Mantelbereiche in ihrem Brechungsindex unterscheiden. Das Diagramm enthält zwei Kurven. Die Kurve A zeigt ein anhand des Standes der Technik ermitteltes Brechzahlprofil und die Kurve B ein Brechzahlprofil, das anhand der Erfindung ermittelt worden ist. Dabei wurde die Vorform mit den Messwellenlängen 842 nm, 977 nm und 1080 nm abgescannt und die danach erhaltenen Intensitätsverteilungen wurden anhand des oben erläuterten ersten mathematischen Verarbeitungsschritts (Multiplikation ortgleicher Intensitätswerte) und des zweiten mathematischen Verarbeitungsschritts (Intensitäts-Schwellwertfilter bei 10% der Maximalintensität) überarbeitet. Das Brechzahlprofil der Vorform, wie es Kurve B wiedergibt und wie es nach Verfahrensschritt (d) von Anspruch 1 erhalten wird, bietet eine gute Grundlage für die weitere Aufbereitung der Brechzahlverteilung anhand üblicher Methoden, beispielsweise der in der EP 3 315 948 A1 beschriebenen Methode. Bei dieser Methode dient das Brechzahlprofils zur Festlegung von Orientierungswerten, wie beispielsweise einem Orientierungswert für einen Schichtradius der Vorform oder einem Orientierungswert für den Brechungsindex der Schicht. Demgegenüber sind beim Brechzahlprofil von Kurve A die Brechzahlen im inneren Mantelbereich 51 und im Kernbereich 50 zu niedrig und das Stufenindex-Profil nicht deutlich ausgeprägt. Es zeigt sich, dass Verzerrungen auftreten, die durch die zugrundeliegende Mathematik auch das Kernniveau verschieben und deformieren können.

Bei nicht-radialsymmetrischen Brechzahlverteilungen erfolgt die Umrechnung aus der gemessenen Ablenkwinkelverteilung vorteilhafterweise nicht mittels der inversen Abel-Transformation, sondern mittels einer sogenannten inversen-Radon-Transformation. Dabei erfolgt die Aufbereitung der Ablenkwinkelverteilung wie oben anhand des Beispiels erläutert. Allerdings werden mehrere Ablenkwinkelverteilungen ermittelt, indem die Vorform um ihre Längsachse rotiert wird. Die jeweiligen Ablenkwinkelverteilungen werden zusammengefasst und in ein Phasendifferenz-Diagramm, dem sogenannten Sinogramm, umgerechnet. Die Anwendung der inversen Radon-Transformation auf letzteres ergibt eine 2D-Brechzahlverteilung.

## Patentansprüche

1. Verfahren zur Ermittlung eines Brechungsindexprofils eines optischen Gegenstandes (22), der eine zylinderförmige Oberfläche (26) und eine Zylinder-Längsachse (25) aufweist, mit folgenden Verfahrensschritten:
(a) Abscannen der zylinderförmigen Oberfläche (26) des Gegenstandes (22) an mehreren Abtastorten (23) mittels senkrecht zur Zylinder-Längsachse (25) auftreffender optischer Strahlen (21),
(b) Erfassen einer ortsabhängigen Intensitätsverteilung (40a, 40b, 40c) der im optischen Gegenstand (22) abgelenkten optischen Strahlen (21) mittels eines optischen Detektors (7; 8),
(c) Bestimmen der Ablenkwinkel der Strahlen nullter Ordnung (I₀) für jeden Abtastort (23) aus der Intensitätsverteilung (40a, 40b, 40c), umfassend ein Eliminieren von Strahlen-Intensitäten von Strahlen höherer Ordnung (I₁, I₂, I₃) aus der Intensitätsverteilung (40a, 40b, 40c), so dass eine Ablenkwinkelverteilung für die Strahlen nullter Ordnung (I₀) erhalten wird, und
(d) Berechnen des Brechungsindexprofils des Gegenstandes (22) basierend auf der Ablenkwinkelverteilung,
wobei die Verfahrensschritte (a) und (b) jeweils mit Lichtstrahlen unterschiedlicher Wellenlänge (λ₁, λ2, λ₃) durchgeführt werden, wobei eine erste ortsabhängige Intensitätsverteilung (40a) eines ersten Lichtstrahls mit einer ersten Wellenlänge (λ₁) und mindestens eine weitere, zweite ortsabhängige Intensitätsverteilung (40b) eines zweiten Lichtstrahls mit einer zweiten Wellenlänge (λ₂) erhalten werden, und wobei das Eliminieren von Strahlen-Intensitäten von Strahlen höherer Ordnung (I₁, I₂, I₃) einen Vergleich von Strahlen-Intensitäten der ersten Intensitätsverteilung (40a) und der zweiten Intensitätsverteilung (40b) bei gleichen Abtastorten (23) umfasst, **dadurch gekennzeichnet, dass** zum Eliminieren von Strahlen-Intensitäten von Strahlen höherer Ordnung (I₁, I₂, I₃) ortsgleiche Intensitäten der ersten und zweiten Intensitätsverteilung (40a; 40b) mathematisch miteinander verarbeitet werden, und wobei die mathematische Verarbeitung eine Verarbeitung der Schnittmengen von ortsgleichen Intensitäten, insbesondere mindestens eine Multiplikation und/oder mindestens eine Addition der ortsgleichen Intensitäten der ersten und zweiten Intensitätsverteilung (40a; 40b) umfasst.

2. Verfahren nach Anspruch 1, **dadurch gekennzeichnet, dass** das Eliminieren von Ablenkwinkeln von Strahlen höherer Ordnung (I₁, I₂, I₃) eine Maßnahme umfasst, bei der Intensitäten der ersten und/oder der zweiten Intensitätsverteilung (40a; 40b), die einen Intensität-Schwellwert (L) unterschreiten, ganz oder teilweise eliminiert werden.

3. Verfahren nach Anspruch 2, **dadurch gekennzeichnet, dass** der Intensität-Schwellwert (L) auf einen Wert gesetzt wird, der weniger als 20%, vorzugsweise weniger als 15%, eines maximalen Intensitätswertes der Intensitätsverteilung (I_{λ1}(y); I_{λ2}(y)) beträgt.

4. Verfahren nach einem oder mehreren der Ansprüche 1 bis 3, **dadurch gekennzeichnet, dass** das Eliminieren von Strahlen-Intensitäten von Strahlen höherer Ordnung (I₁, I₂, I₃) eine rechnergestützte Bildverarbeitung umfasst.

5. Verfahren nach einem der vorhergehenden Ansprüche, **dadurch gekennzeichnet, dass** zum Erfassen der Intensitätsverteilung (40a, 40b, 40c) gemäß Verfahrensschritt (b) als optischer Detektor eine Zeilenkamera (7) mit nur einem lichtempfindlichen Zeilensensor (8) eingesetzt wird.

6. Verfahren nach Anspruch 5, **dadurch gekennzeichnet, dass** ein monochromatischer Zeilensensor eingesetzt wird, der vorzugsweise mit einer Bittiefe von 8 betrieben wird, und der besonders bevorzugt eine Länge von mindestens 40 mm, vorzugsweise mindestens 60 mm aufweist.

7. Verfahren nach einem der vorhergehenden Ansprüche, **dadurch gekennzeichnet, dass** zum Abscannen der zylinderförmigen Oberfläche (26) gemäß Verfahrensschritt (a) der optische Strahl (21) mittels eines Parabolspiegels (5) fokussiert wird.

8. Verfahren nach einem der vorhergehenden Ansprüche, **dadurch gekennzeichnet, dass** sich die erste Wellenlänge (λ₁) und die zweite Wellenlänge (λ₂, λ₃) um mindestens 50 nm und um maximal 400 nm, und vorzugsweise um mindestens 80 nm und um maximal 300 nm voneinander unterscheiden.

9. Verfahren nach Anspruch 8, **dadurch gekennzeichnet, dass** die Verfahrensschritte (a) und (b) mit Strahlung der ersten Wellenlänge (λ₁) und anschließend mit Strahlung der zweiten Wellenlänge (λ₂, λ₃) durchgeführt werden.

10. Verfahren nach Anspruch 8 oder 9, **dadurch gekennzeichnet, dass** die Verfahrensschritte (a) und (b) mit Strahlung der ersten Wellenlänge (λ₁), der zweiten Wellenlänge (λ₂) und einer dritten Wellenlänge (λ₃) durchgeführt werden, wobei die dritte Wellenlänge (λ₃) länger als die erste und kürzer als die zweite Wellenlänge (λ₂) ist, und sich die dritte Wellenlänge (λ₃) von der ersten Wellenlänge (λ₁) und von der zweiten Wellenlänge (λ₂) um mindestens 50 nm und um maximal 400 nm, und vorzugsweise um mindestens 80 nm und um maximal 300 nm unterscheidet.

11. Verfahren nach einem der vorhergehenden Ansprüche, **dadurch gekennzeichnet, dass** die unterschiedlichen Wellenlängen (λ₁, λ₂, λ₃) im Wellenlängenbereich von 400 bis 1.600 nm, und vorzugsweise unterhalb von 1.100 nm liegen.

12. Verfahren nach einem der vorhergehenden Ansprüche, **dadurch gekennzeichnet, dass** die unterschiedlichen Wellenlängen (λ₁, λ₂, λ₃) ausgewählt sind aus den Wellenlängenbereichen: 635 ±50 nm, 840 ±50 nm, 970 ±50 nm, 1040 ±50 nm.

13. Verfahren nach einem der vorhergehenden Ansprüche, **dadurch gekennzeichnet, dass** die Strahlen (21) beim Abscannen der zylinderförmigen Oberfläche (26) des Gegenstandes (22) auf einen Punkt (25) im optischen Gegenstand fokussiert werden.

## Claims

1. A method for determining a refractive index profile of an optical object (22) comprising a cylindrical surface (26) and a cylinder longitudinal axis (25), comprising the following method steps:
(a) scanning the cylindrical surface (26) of the object (22) at a plurality of scanning locations (23) by means of optical beams (21) incident perpendicular to the cylinder longitudinal axis (25),
(b) detecting a location-dependent intensity distribution (40a, 40b, 40c) of the optical beams (21) deflected in the optical object (22) by means of an optical detector (7; 8),
(c) determining the deflection angles of the zero-order beams (I₀) for each scanning location (23) from the intensity distribution (40a, 40b, 40c), comprising eliminating beam intensities of higher-order beams (I₁, I₂, I₃) from the intensity distribution (40a, 40b, 40c), so that a deflection angle distribution for the zero-order beams (I₀) is obtained, and
(d) calculating the refractive index profile of the object (22) on the basis of the deflection angle distribution,
the method steps (a) and (b) each being performed with light beams of different wavelengths (λ₁, λ₂, λ₃), a first location-dependent intensity distribution (40a) of a first light beam having a first wavelength (λ₁) and at least one further, second location-dependent intensity distribution (40b) of a second light beam having a second wavelength (λ₂) being obtained, and the elimination of beam intensities of higher-order beams (I₁, I₂, I₃) comprising a comparison of beam intensities of the first intensity distribution (40a) and the second intensity distribution (40b) at the same scanning locations (23), **characterized in that** to eliminate beam intensities of higher-order beams (I₁, I₂, I₃), location-identical intensities of the first and second intensity distribution (40a; 40b) are mathematically processed with one another, and the mathematical processing comprising processing of the intersections of location-identical intensities, in particular at least one multiplication and/or at least one addition of the location-identical intensities of the first and second intensity distribution (40a; 40b).

2. The method according to claim 1, **characterized in that** the elimination of deflection angles of higher-order beams (I₁, I₂, I₃) comprises a measure in which intensities of the first and/or the second intensity distribution (40a; 40b) which fall below an intensity threshold (L) are completely or partially eliminated.

3. The method according to claim 2, **characterized in that** the intensity threshold (L) is set to a value which is less than 20%, preferably less than 15%, of a maximum intensity value of the intensity distribution (I_{λ1}(y); I_{λ2}(y)).

4. The method according to one or more of claims 1 to 3, **characterized in that** the elimination of beam intensities of higher-order beams (I₁, I₂, I₃) comprises computer-aided image processing.

5. The method according to any of the preceding claims, **characterized in that** to detect the intensity distribution (40a, 40b, 40c) according to method step (b), a line camera (7) comprising only one light-sensitive line sensor (8) is used as the optical detector.

6. The method according to claim 5, **characterized in that** a monochromatic line sensor is used, which is preferably operated with a bit depth of 8 and which particularly preferably has a length of at least 40 mm, preferably at least 60 mm.

7. The method according to any of the preceding claims, **characterized in that** to scan the cylindrical surface (26) according to method step (a), the optical beam (21) is focused by means of a parabolic mirror (5).

8. The method according to any of the preceding claims, **characterized in that** the first wavelength (λ₁) and the second wavelength (λ₂, λ₃) differ from one another by at least 50 nm and a maximum of 400 nm, and preferably by at least 80 nm and a maximum of 300 nm.

9. The method according to claim 8, **characterized in that** the method steps (a) and (b) are performed with radiation of the first wavelength (λ₁) and then with radiation of the second wavelength (λ₂, λ₃).

10. The method according to claim 8 or 9, **characterized in that** the method steps (a) and (b) are performed with radiation of the first wavelength (λ₁), the second wavelength (λ₂) and a third wavelength (λ₃), the third wavelength (λ₃) being longer than the first and shorter than the second wavelength (λ₂), and the third wavelength (λ₃) differing from the first wavelength (λ₁) and from the second wavelength (λ₂) by at least 50 nm and a maximum of 400 nm, and preferably by at least 80 nm and a maximum of 300 nm.

11. The method according to any of the preceding claims, **characterized in that** the different wavelengths (λ₁, λ₂, λ₃) lie in the wavelength range from 400 to 1,600 nm, and preferably below 1,100 nm.

12. The method according to any of the preceding claims, **characterized in that** the different wavelengths (λ₁, λ₂, λ₃) are selected from the wavelength ranges: 635 ±50 nm, 840 ±50 nm, 970 ±50 nm, 1040 ±50 nm.

13. The method according to any of the preceding claims, **characterized in that** the beams (21) are focused on a point (25) in the optical object when scanning the cylindrical surface (26) of the object (22).

## Revendications

1. Procédé permettant de déterminer un profil d'indice de réfraction d'un objet (22) optique qui présente une surface cylindrique (26) et un axe longitudinal de cylindre (25), comportant les étapes de procédé suivantes :
(a) balayage de la surface cylindrique (26) de l'objet (22) au niveau de plusieurs emplacements de balayage (23) au moyen de rayonnements (21) optiques arrivant perpendiculairement à l'axe longitudinal de cylindre (25),
(b) détection d'une distribution d'intensité (40a, 40b, 40c) dépendant de l'emplacement des rayonnements (21) optiques déviés dans l'objet (22) optique au moyen d'un détecteur optique (7 ; 8),
(c) établissement des angles de déviation des rayonnements d'ordre zéro (I₀) pour chaque emplacement de balayage (23) à partir de la distribution d'intensité (40a, 40b, 40c), comprenant une élimination d'intensités de rayonnements de rayonnements d'ordre supérieur (I₁, I₂, I₃) à partir de la distribution d'intensité (40a, 40b, 40c), de sorte qu'une distribution d'angles de déviation pour les rayonnements d'ordre zéro (I₀) est obtenue, et
(d) calcul du profil d'indice de réfraction de l'objet (22) sur la base de la distribution d'angles de déviation,
dans lequel les étapes de procédé (a) et (b) sont respectivement réalisées avec des rayonnements lumineux de différentes longueurs d'onde (λ₁, λ₂, λ₃), dans lequel une première distribution d'intensité (40a) dépendant de l'emplacement d'un premier rayonnement lumineux comportant une première longueur d'onde (λ₁) et au moins une autre seconde distribution d'intensité (40b) dépendant de l'emplacement d'un second rayonnement lumineux comportant une deuxième longueur d'onde (λ₂) sont obtenues, et dans lequel l'élimination d'intensités de rayonnements de rayonnements d'ordre supérieur (I₁, I₂, I₃) comprend une comparaison d'intensités de rayonnements de la première distribution d'intensité (40a) et de la seconde distribution d'intensité (40b) aux mêmes emplacements de balayage (23), **caractérisé en ce que,** pour l'élimination d'intensités de rayonnements de rayonnements d'ordre supérieur (I₁, I₂, I₃), des intensités de même emplacement de la première et de la seconde distribution d'intensité (40a ; 40b) sont traitées mathématiquement l'une avec l'autre, et dans lequel le traitement mathématique comprend un traitement des intersections d'intensités de même emplacement, en particulier au moins une multiplication et/ou au moins une addition des intensités de même emplacement de la première et de la seconde distribution d'intensité (40a ; 40b).

2. Procédé selon la revendication 1, **caractérisé en ce que** l'élimination d'angles de déviation de rayonnements d'ordre supérieur (I₁, I₂, I₃) comprend une mesure lors de laquelle des intensités de la première et/ou de la seconde distribution d'intensité (40a ; 40b), lesquelles intensités sont inférieures à une valeur seuil d'intensité (L), sont éliminées totalement ou partiellement.

3. Procédé selon la revendication 2, **caractérisé en ce que** la valeur seuil d'intensité (L) est fixée à une valeur qui est inférieure à 20 %, de préférence inférieure à 15 %, d'une valeur d'intensité maximale de la distribution d'intensité (I_{λ1}(y) ; I_{λ2}(y)).

4. Procédé selon l'une ou plusieurs des revendications 1 à 3, **caractérisé en ce que** l'élimination d'intensités de rayonnements d'ordre supérieur (I₁, I₂, I₃) comprend un traitement d'image assisté par ordinateur.

5. Procédé selon l'une des revendications précédentes, **caractérisé en ce que,** pour la détection de la distribution d'intensité (40a, 40b, 40c) conformément à l'étape de procédé (b), une caméra linéaire (7) comportant uniquement un capteur linéaire (8) sensible à la lumière est utilisée comme détecteur optique.

6. Procédé selon la revendication 5, **caractérisé en ce qu'**un capteur linéaire monochromatique est utilisé, lequel fonctionne de préférence avec une profondeur de bits de 8, et présente de manière particulièrement préférée une longueur d'au moins 40 mm, de préférence d'au moins 60 mm.

7. Procédé selon l'une des revendications précédentes, **caractérisé en ce que,** pour le balayage de la surface cylindrique (26) conformément à l'étape de procédé (a), le rayonnement (21) optique est focalisé au moyen d'un réflecteur parabolique (5).

8. Procédé selon l'une des revendications précédentes, **caractérisé en ce que** la première longueur d'onde (λ₁) et la deuxième longueur d'onde (λ₂, λ₃) diffèrent entre elles d'au moins 50 nm et d'au plus 400 nm, et de préférence d'au moins 80 nm et d'au plus 300 nm.

9. Procédé selon la revendication 8, **caractérisé en ce que** les étapes de procédé (a) et (b) sont réalisées avec un rayonnement de la première longueur d'onde (λ₁) et ensuite avec un rayonnement de la deuxième longueur d'onde (λ₂, λ₃).

10. Procédé selon la revendication 8 ou 9, **caractérisé en ce que** les étapes de procédé (a) et (b) sont réalisées avec un rayonnement de la première longueur d'onde (λ₁), de la deuxième longueur d'onde (λ₂) et d'une troisième longueur d'onde (λ₃), dans lequel la troisième longueur d'onde (λ₃) est plus longue que la première et plus courte que la deuxième longueur d'onde (λ₂), et la troisième longueur d'onde (λ₃) diffère de la première longueur d'onde (λ₁) et de la deuxième longueur d'onde (λ₂) d'au moins 50 nm et d'au plus 400 nm, et de préférence d'au moins 80 nm et d'au plus 300 nm.

11. Procédé selon l'une des revendications précédentes, **caractérisé en ce que** les différentes longueurs d'onde (λ₁, λ₂, λ₃) sont comprises dans la gamme de longueurs d'onde allant de 400 à 1600 nm, et sont de préférence inférieures à 1100 nm.

12. Procédé selon l'une des revendications précédentes, **caractérisé en ce que** les différentes longueurs d'onde (λ₁, λ₂, λ₃) sont choisies parmi les gammes de longueurs d'onde : 635 ± 50 nm, 840 ± 50 nm, 970 ± 50 nm, 1040 ± 50 nm.

13. Procédé selon l'une des revendications précédentes, **caractérisé en ce que** les rayonnements (21) sont focalisés sur un point (25) dans l'objet optique lors du balayage de la surface cylindrique (26) de l'objet (22).
